(19) Europäisches Patentamt
European Patent Office
Office européen des brevets

(11) Publication number: **0 218 364 B1**

(12) # EUROPEAN PATENT SPECIFICATION

(45) Date of publication of patent specification: **30.01.91**

(51) Int. Cl.$^5$: **C 09 J 163/00,** C 08 F 255/00

(21) Application number: **86306778.1**

(22) Date of filing: **02.09.86**

(54) **Initiator compositions for two part acrylic adhesives.**

(30) Priority: **03.09.85 GB 8521845**

(43) Date of publication of application:
**15.04.87 Bulletin 87/16**

(45) Publication of the grant of the patent:
**30.01.91 Bulletin 91/05**

(84) Designated Contracting States:
**BE DE FR IT NL**

(56) References cited:
**GB-A-2 039 507**

(73) Proprietor: **National Starch and Chemical Investment Holding Corporation**
**501 Silverside Road**
**Wilmington, Delaware 19809 (US)**

(72) Inventor: **Lees, William Arthur**
**Hillside Cottage Hackupps Lane Michelmersh**
**Romsey Hampshire SO5 0NP (GB)**

(74) Representative: **Lambert, Hugh Richmond et al**
**D. YOUNG & CO. 10 Staple Inn**
**London, WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to initiator compositions for use in two part acrylic adhesive and sealant systems.

Particularly, but not exclusively, the invention relates to initiator compositions for two part acrylic adhesives of the type disclosed in US—A—3,890,407, US—A—3,962,372, US—A—3,994,764, US—A—4,112,013 and US—A—4,118,436, and in EP—A—0 044 166, i.e. containing a toughening agent, e.g. chlorosulfonated polyethylene, a polyurethane, or other low molecular weight rubber or elastomer dissolved in the acrylic monomer.

In the application of two part acrylic adhesives, the monomeric component, i.e. comprising the polymerisable acrylic monomer, the catalyst, and the optional ingredients, e.g. stabilizers, antioxidants, polymerisation inhibitors and toughening agents such as chlorosulphonated polyethylene or low molecular weight reactive elastomers such as a vinyl-terminated polybutadiene/acrylonitrile, and the initiator component, usually comprising an amine/aldehyde condensate, are usually applied separately each to a different one of the two surfaces to be joined, the two surfaces then being brought together and clamped whilst the adhesive cures, the cure being initiated by contact between the superimposed layers or films of primer, i.e. the initiator, and the monomeric component. In an alternative technique, the primer and the monomeric component can be applied both to the same surface, or to both surfaces, before those surfaces are brought into contact. Whilst such techniques are satisfactory when applying the adhesive between closely mating surfaces, i.e. with gap widths between the mating surfaces of the order of 0.05 mm or less, such techniques are not so successful in the sealing or bonding of larger gaps, i.e. greater than about 0.25 mm, due to a non-uniformity of cure, or poor "cure through". In this connection, in certain industries, for example, the vehicle manufacturing industry, gap sizes of 3 to 4 mm are commonplace and cannot presently be sealed, at least not satisfactorily, with conventional acrylic adhesives.

To overcome the problem of poor cure through on larger gap sizes, the acrylic monomer component and the initiator component can be premixed immediately prior to application or injection of the adhesive, and for this purpose dual adhesive applicators and injection devices, e.g. self-porportioning, twin pack cartridge dispensers, have been developed, not exclusively in the field of acrylic adhesives and sealants, but in other adhesive fields as well, for the simultaneous ejection and mixing of the two components in predetermined proportions.

However, such self-proportioning, twin pack cartridge dispensers present a further problem in that, for accurate proportioning of the two components the relative proportions of the two components, on a volume basis, must not be greater than about 10:1. Traditional two part acrylic adhesive compositions are, however, used at much higher ratios, for example, at volume ratios of the order of 50:1 or more, i.e. the volume ratio of the acrylic monomer component to the initiator component.

For that reason, it is desirable to provide a diluent or bulking agent for the initiator which enables the initiator volume to be increased, with consequent lower injection or mixing ratios, but which, at the same time, does not adversely affect the properties of the cured adhesive, or for that matter the properties, e.g. the activity of the initiator.

Surprisingly, it has now been found that epoxy resins such as the diglycidyl ether of bisphenol A, are satisfactory bulking agents for such initiators, such mixtures showing no sign of premature gellation in accelerated storage tests, which is surprising in view of the high reactivity of both the initiator and the bulking agent. Also it has been found that the incorporation of relatively large amounts of epoxy resin into the adhesive formulation via the initiator does not adversely affect the bond strength, indeed initial experiments show an increase in bond strength using such bulked initiators.

In GB—A—2 039 507 a primer is disclosed for acrylate/chlorosulphonated polyethylene adhesives comprising an amine-aldehyde condensate and the salt of a transition metal. As the adhesive component there are disclosed compositions containing, in addition to the acrylic monomer and chlorosulphonated polyethylene components, an epoxy resin such as a condensate of bisphenol A and epichlorohydrin. It is suggested, and indeed it is conventional, to include in the primer other components, such as one or more organic solvents to act as diluents or viscosity modifiers, but it is not suggested that the epoxy resin should or could be included as a component of the primer. Indeed, that would, absent the present invention, be contradicted since it might have been expected that the amine-aldehyde condensate and the epoxy resin would react together, causing the primer to undergo premature gellation. After all, amines are known to be and are used as curing agents for epoxy resins. It is surprising, and to some extent inexplicable discovery of the present invention that amine-aldehyde condensate used as acrylic adhesive initiators do not undergo any significant chemical reaction with epoxy resins, thus enabling their beneficial use as bulking agents for amine-aldehyde initiators in accordance with the teachings of this invention.

In accordance with one aspect of this invention, therefore, there are provided amine-aldehyde initiator compositions for use with two part acrylic adhesives and comprising in admixture with the amine-aldehyde condensate, from 10 to 90% by weight based on the total composition, of an epoxy resin. The amine-aldehyde content of the initiator composition will usually be in the range 5 to 50% by weight based on the total composition, preferably 15 to 30%, the balance, if any, comprising optional ingredients such as fillers, antioxidants, stabilizers, polymerisation inhibitors, viscosity modifiers etc. The initiator composition may also, as is known, contain a proportion of the monomer component.

The bulking agents or diluents used in the initiator compositions are, as indicated, epoxy resins, that is to say condensates of epichlorohydrin with a polyhydric material, e.g. ethylene glycol, glycerol, bisphenol A, bisphenol F and other polyhydric phenols and phenol condensates. Such epoxy resins are extensively used in their own right as adhesive compositions and in which they are cured by reaction with a crosslinking or curing agent, frequently a primary amine, usually an aliphatic polyamine, but occasionally an aromatic polyamine, hence the surprise that these epoxy resins can be admixed with amine-aldehyde condensates at temperatures up to 50°C without premature gellation and without any apparent reduction in the initiator activity of the amine-aldehyde condensate. Usually the epoxy resins used as bulking agents or diluents in accordance with this invention will be liquid resins with molecular weights up to about 600, although solid, low melting point resins can be used in the presence of a suitable cosolvent for the resin and the amine-aldehyde initiator. The preferred bulking agents or diluents for use in the compositions of this invention are the diglycidyl ether of bisphenol A and the glycidyl ethers of phenol-formaldehyde resins, e.g. the resins sold under the name NOVALAC.

The amine-aldehyde condensates used as the initiator component in the compositions of this invention are conventional amine-aldehyde condensates of the type described, for example, in the above listed U.S. Patents and more particularly in US—A—3,591,438. Typical amines used in the preparation of such condensates are primary aliphatic or aromatic amines having 1 to 18 carbon atoms such as ethylamine, butylamines, pentylamines, cyclopentylamine, hexylamines, cyclohexylamine, dodecylamine, aniline, tolylamine and xylylamine, and typical aldehydes are aliphatic aldehydes containing from 1 to 12 carbon atoms such as acetaldehyde, propionaldehyde, butyraldehyde, crotonaldehyde, acrolein, hydro-cinnamaldehyde etc. The preferred initiators for use in this invention are VANAX 808, a condensate of aniline and butyraldehyde and VULKACIT 576, a condensate of homologous acroleins and aromatic amines.

A variety of optional components such as thickeners, fillers, polymerisation inhibitors, antioxidants, viscosity modifiers, etc. may be incorporated into the initiator compositions of this invention, including inert particulate fillers and thckeners such as finely divided silica powder. Such additives are largely conventional and do not need to be further described. Also the initiator compositions may contain a proportion of the acrylic monomer, e.g. an acrylate ester such as methyl methacrylate.

The bulked initiator compositions of this invention are particularly designed for use with toughened two part acrylic adhesives and sealants containing an elastomer, preferably chlorosulphonated polyethylene, as a toughening agent. Other suitable toughening agents include styrene-butadiene/block copolymers, polyurethanes, vinyl- or carboxy-terminated butadiene acrylonitrile copolymers, i.e. the so-called HYCAR rubbers, and others.

Acrylic adhesive compositions of this general type are disclosed in US—A—3,890,407, 3,962,372, US—A—4,112,013 and US—A—4,118,436, and in EP—A—0 044 166.

The principal polymerisable component of such two part acrylic adhesive compositions may be any of the acrylate or methacrylate esters mentioned in the publications previously referred to, optionally and usually in admixture with acrylic and/or methacrylic acid as an adhesion promoter. Thus typical acrylic monomers for use in this invention are alkyl, cycloalkyl, alkoxyalkyl and hydroxyalkyl acrylates and methacrylates, and alkylene and polyalkylene diacrylates and dimethacrylates. Specific examples are: $C_1$—$C_8$ alkyl acrylates and methacrylates, particularly methyl, ethyl, propyl, n-butyl, isobutyl and ethylhexyl methacrylates, $C_2$—$C_3$ hydroxyalkyl acrylates and methacrylates, particularly hydroxyethyl methacrylate, $C_1$—$C_5$ alkoxy ($C_1$—$C_5$) alkyl methacrylates e.g. ethoxyethyl methacrylate, lauryl methacrylate, tetrahydrofurfuryl methacrylate, isobornyl methacrylate, and poly ($C_2$—$C_3$) alkylene dimethacrylates, e.g. triethyleneglycol dimethacrylate. Particularly preferred acrylic monomer combinations for use in this invention are combinations of (a) an acrylate ester selected from one or more of the following: methyl methacrylate, isobornyl methacrylate, 2-ethoxyethyl methacrylate, tetrahydrofurfuryl methacrylate and triethyleneglycol dimethacrylate, and (b) methacrylic acid.

Although chlorosulphonated polyethylene is the preferred toughening agent, other polymers may also be used, for example, polychloroprene or an elastomer, such as acrylonitrile/butadiene or styrene/butadiene, which contains terminal or pendant sulphonyl chloride (—$SO_2Cl$), carboxy, vinyl or methacrylic groups. Amounts of toughening agent may range from 5 to 50% by weight, based on the weight of monomer, more usually 10 to 35%.

Included in the monomeric component will be a free radical initiator system, capable when the two components are mixed, of initiating the free radical polymerisation of the monomer component. Usually the free radical initiator system will include an organic peroxide or hydroperoxide, or an organic peracid or perester. Typical and preferred peroxy compounds are cumene hydroperoxide and t-benzyl benzoate, although a wide variety of other peroxy compounds can be used. Such peroxy compounds will usually, but not necessarily, be used in combustion with one or more tertiary amines and/or promoters such as copper or cobalt naphthenate to complete the initiator system.

Also, as previously indicated the bulked initiator compositions of this invention are particularly designed for use in self-proportioning, twin cartridge type adhesive applicators, but other methods of applying the initiator, in admixture with, or separately from the adhesive, e.g. as a primer can be used. Depending on the apparatus used, and the particular compositions used, the acrylic monomer component and the bulked initiator can be used or premixed at a variety of different volume ratios, for example, at a

volume ratio of 20:1 or lower and preferably at about 10:1.

One of the particular benefits which has been noted in the use of the bulked initiator systems of this invention, is a reduction of the exotherm during the curing of the adhesive. This enables one to apply relatively thick layers of adhesive, e.g. 3 to 4 mm or more, without risking undue exothermic heating of the mix with possible adverse consequences on the final bond, due, for example, to the boiling off of monomer which occurs if the exotherm causes an excessive rise in temperature.

Other advantages to be noted are reduced odour, good shelf stability, good working times and a marked lack of sensitivity to the mix ratio of monomer to initiator.

The invention is illustrated by the following Examples.

Example 1

In this example a two part acrylic adhesive system (System B) was prepared comprising as the first part:

| | |
|---|---|
| methyl methacrylate | 56.2% by weight |
| methacrylic acid | 10.0% by weight |
| chlorosulphonated polyethylene | 33.3% by weight |
| cumene hydroperoxide | 0.5% by weight |

and as the second part:

| | |
|---|---|
| amine/aldehyde initiator (Vanax* 808) | 20.0% by weight |
| diglycidyl ether of bisphenol A | 76.5% by weight |
| fumed silica | 2.5% by weight |
| polyethylene glycol (m.w. 200) | 1.0% by weight |

* commercially available condensate of butyraldehyde and aniline.

For a comparison a second, conventional two part acrylic adhesive system (System A) was prepared comprising as the first part:

| | |
|---|---|
| methyl methacrylate | 51.4% by weight |
| methacrylic acid | 10.0% by weight |
| chlorosulphonated polyethylene | 33.3% by weight |
| diglycidyl ether of bisphenol A | 4.8% by weight |
| cumene hydroperoxide | 0.5% by weight |

and as the second part:

| | |
|---|---|
| amine/aldehyde condensate Vanax 808 | 100% |

In a comparative test procedure the bond strengths of System A and System B were compared both on polyvinyl chloride substrates and steel substrates. In applying System A, the initiator was painted onto one surface in a conventional manner, and the monomeric component applied as a bead on the other. The two were then brought together and clamped until handling strength was achieved. In applying System B, the monomeric component and the initiator component were premixed in a volume ratio of 10:1 and applied between the two surfaces, which were then clamped together until handling strength was achieved. The following test results were obtained:

| | | System A | System B |
|---|---|---|---|
| Time to handling strength on PVC | | 75s | 60s |
| Time to handling strength on steel | | 165s | 135s |
| Ultimate strength | Impact J | 47.4 | 48.2 |
| Ultimate strength | Shear MPa | 24.7 | 26.8 |
| Ultimate strength | Peel N/25mm | 152 | 179 |

As will be seen System B performs marginally better than System A.

In a separate accelerated ageing test, the initiator composition of System B was held at 50°C for a prolonged period. No gellation occured, and the initiator retained its activity even after 28 days, indicating a substantial shelf-life under normal, room temperature storage conditions.

Example 2

A bulked initiator composition according to this invention was prepared having the formulation:

| | |
|---|---|
| diglycidyl ether of bisphenol A (DOW 331) | 76.5% by weight |
| amine-aldehyde condensate (VULKACIT 576: a commercially available initiator comprising a condensation product of homologous acroleins and aromatic amines) | 20.0% by weight |
| finely divided silica (WACKER HDK N20) | 2.5% by weight |
| polyethyleneglycol (m.w. 200) | 1.0% by weight |

The bulked initiator composition was premixed at a volume ratio of 10:1 (monomeric component:initiator) with an acrylic adhesive formulation as follows:

| | |
|---|---|
| isobornyl methacrylate | 19.60% by weight |
| 2-ethoxyethyl methacrylate | 36.20% by weight |
| methacrylic acid | 9.80% by weight |
| triethyleneglycol dimethacrylate | 1.00% by weight |
| chlorosulphonated polyethylene (HYPALON 20) | 30.80% by weight |
| butylated hydroxy toluene | 1.04% by weight |
| oxalic acid | 0.01% by weight |
| cumene hydroperoxide | 0.52% by weight |
| γ-glycidoxypropyltrimethyl silane | 1.03% by weight |

and the bond strengths obtained at various thicknesses compared with a conventional two part acrylic adhesive applied using a conventional initiator VANAX 808 (an aniline-butyraldehyde condensate) applied as a separate primer to the substrate to be bonded in a conventional manner. The adhesive formulation used was:

| | |
|---|---|
| isobornyl methacrylate | 19.00% by weight |
| 2-ethoxyethyl methacrylate | 34.26% by weight |
| methacrylic acid | 9.52% by weight |

| | |
|---|---|
| triethyleneglycol dimethacrylate | 0.95% by weight |
| diglycidyl ether of bisphenol A (DOW 331) | 4.76% by weight |
| chlorosulphonated polyethylene (HYPALON 20) | 30.00% by weight |
| butylated hydroxy toluene | 1.00% by weight |
| cumene hydroperoxide | 0.50% by weight |
| oxalic acid | 0.01% by weight |

The results obtained are as follows:

| | | Conventional Initiator | Bulked Initiator |
|---|---|---|---|
| Handling time in minutes on steel | | 2 | 2 |
| Impact strength, steel, .05mm bond line | | 150 kg.f.cm. | 200 kg.f.cm. |
| Shear strength, steel, .05mm bond line | | 18 $MNm^{-2}$ | 17.7 $MNm^{-2}$ |
| Peel strength, aluminium, .05mm bond line | | 100 N/25mm | 130 N/25mm |
| Peel strength, aluminium, .25mm bond line | | 70 N/25mm | 160 N/25mm |
| Peel strength, aluminium, 3mm bond line | | - | 180 N/25mm |
| Durability on aluminium-lithium alloy, lap shear $MNm^{-2}$ | Original strength | 19.3 | 19.6 |
| | After 2000h salt spray | 8.4 | 13.3 |
| | After 2000h 40°C 95% R.H. | 15.1 | 16.3 |

These results indicate the similar performance of the two systems on thin bond lines and the superior performance of the bulked initiator system on thick bond lines. The durability of the pre-mix system is at least as good if not superior to that of the conventional system.

Accelerated ageing tests at 50°C on the bulked initiator showed no loss of activity or signs of gellation after 28 days. This would indicate the storage life of the initiator to be well in excess of 1 year under normal conditions and is excellent.

Example 3

Using the same bulked initiator composition and the same adhesive formulation as in Example 2, further tests have been carried out to determine the effect of the open time, i.e. the time between mixing the adhesive and the initiator and the assembly of the joint, on the time taken to obtain handling strength and the ultimate bond strength of the joint. The adhesive and initiator were premixed at a volume ratio of 10:1. The results obtained are as follows:

| Open Time (Minutes) | Handling Time (Minutes) | Peel Strength on Abraded Aluminium N/25 mm |
|---|---|---|
| 0 | 1.75 | 102 |
| 1 | 1.75 | |
| 2 | 1.75 | 110 |
| 3 | 1.75 | |
| 4 | 1.75 | 116 |
| 5 | 1.75 | |
| 6 | 1.75 | 122 |
| 8 | (not measured) | 124 |
| 10 | (not measured) | 126 |
| 12 | (not measured) | 127 |

These results clearly show that the handling time is completely independent of open time, at least up to 6 minutes open time, and that the mixed adhesive has a quite considerable usable working life (i.e. time between mixing and assembly) with open times up to 12 minutes actually showing an increase in ultimate bond strength.

Still using the same adhesive and the same bulked initiator, further tests have been carried out using different proportions of adhesive and initiator. The results obtained are as follows:

| Volume Ratio Adhesive:Initiator | Peel Strength on Abraded Aluminium N/25 mm |
|---|---|
| 7.5:1 | 145 |
| 9.0:1 | 145 |
| 10.0:1 | 162 |
| 11.0:1 | 135 |
| 12.5:1 | 139 |

These results demonstrate that using the thickened initiator compositions of this invention, the ultimate bond strength is relatively independent of monomer:initiator ratio. This relative insensitivity to mix ratio is of obvious commercial benefit, since accurate proportioning of the two components is not required.

Example 4

Using the same bulked initiator as in Example 2, further tests have been carried out using the initiator premixed with a different acrylic adhesive formulation at a volume ratio (monomer:initiator) of 10:1. The adhesive formulation in this case was:

| | |
|---|---|
| methyl methacrylate | 35.73% by weight |
| triethyleneglycol dimethacrylate | 0.95% by weight |
| epoxidised dicyclopentenylmethacrylate | 15.00% by weight |
| butylated hydroxy toluene | 0.20% by weight |
| chlorosulphonated polyethylene (HYPALON 20) | 33.34% by weight |

| | |
|---|---|
| diglycidyl ether of bisphenol A (DOW 331) | 4.76% by weight |
| methacrylic acid | 9.52% by weight |
| cumene hydroperoxide | 0.50% by weight |

The following results have been obtained:

| | |
|---|---|
| Shear strength, steel, $MNm^{-2}$ | 32.3 |
| Impact strength, steel, kg.f.cm. | >500 |
| Peel strength, aluminium, N/25mm | 170 |

These figures confirm that the initiator is capable of giving exceptionally high bond strengths, i.e. the use of the epoxy resin in the initiator system does not interfere significantly with the product performance.

Example 5

Bulked initiator compositions of the same formulation as in Example 2 were prepared but replacing the epoxy resin (DOW 331) with an equivalent amount of (a) the reaction of DOW 331 and a carboxy terminated butadiene/acrylonitrile copolymer (HYCAR CTBN) as a result of which all the epoxy groups were eliminated, and (b) an epoxy novalac resin (DEN 438), i.e. a glycidyl ether of a phenol-formaldehyde condensate of the general formula:

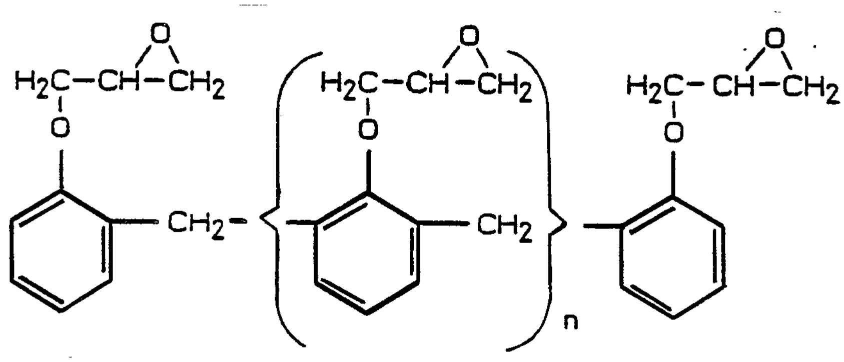

EEW (Epoxy equivalent weight) = 180 g.

Using the same adhesive formulation as in Example 2 at the same 10:1 premixed ratio the following results were obtained.

| | Initiator Composition of Example 2 | Initiator Composition with DEN 438 | Initiator Composition with DOW 331/ HYCAR CTBN reaction product |
|---|---|---|---|
| Shear strength, steel, room temperature, $MNm^{-2}$ | 17.4 | 15.7 | 3.9 |
| Peel strength, aluminium N/25 mm | 140 | 157 | 5 |

These results illustrate the utility of a different epoxy resin as the bulking agent for the initiator system, and the importance of using as the bulking agent an epoxy resin with its epoxy groups intact.

In so far as any or all of the trade names used herein, viz:

NOVALAC
VANAX
VULKACIT
HYCAR
DOW
WACKER
HYPALON

may be Registered Trade Marks in any or all designated states they are hereby acknowledged as such.

**Claims**

1. An initiator composition for acrylic adhesives comprising an amine-aldehyde condensate and a bulking agent or diluent, characterised in the bulking agent or diluent comprises an epoxy resin present in an amount of from 10% to 90% by weight based on the total weight of the composition.

2. A composition according to claim 1, characterised in that it contains from 5 to 50% by weight of the amine-aldehyde condensate.

3. A composition according to claim 2, characterised in that the amine-aldehyde content is from 15 to 30% by weight.

4. A composition according to any one of the preceding claims, characterised in that it additionally contains a finely divided particulate solid material.

5. A composition according to claim 4, characterised in that the finely divided solid material is silica.

6. A composition according to any one of claims 1—5, characterised in that the amine-aldehyde condensate is a condensate of aniline and butyraldehyde.

7. A composition according to any one of claims 1—6, characterised in that the bulking agent is a liquid epoxy resin having a molecular weight below about 600.

8. A composition according to claim 7, characterised in that the bulking agent is the diglydicyl ether of bisphenol A.

9. A two part acrylic adhesive composition comprising a monomeric component comprising one or more acrylate esters in admixture with a free radical catalyst system, and an initiator component containing an amine-aldehyde condensate capable of initiating the free radical polymerisation of said monomeric component when mixed therewith, characterised in that the initiator component is a composition according to any one of claims 1—8.

10. A adhesive composition according to claim 9, characterised in that the monomeric component contains an elastomeric toughening agent.

11. An adhesive composition according to claim 10, characterised in that the toughening agent is a chlorosulphonated polyethylene.

12. A composition according to claim 9, 10 or 11, characterised in that the monomeric component and the initiator component are separately packaged for use in a self-proportioning twin pack cartridge type adhesive applicator.

13. A method of applying a two part acrylic adhesive composition to a substrate which comprises premixing a monomeric component containing a polymerisable acrylate ester in admixture with a free radical polymerisation catalyst system, with an initiator component containing an amine-aldehyde condensate, and applying the mixed adhesive to the substrate to be bonded, characterised in that the initiator component is a composition as claimed in any one of claims 1—8.

14. A method according to claim 13, characterised in that the monomeric component and the initiator component are premixed at a volume ratio of 20:1 or less.

15. A method according to claim 14, characterised in that said ratio is about 10:1.

16. A method according to claim 13, 14 or 15, characterised in that the adhesive is applied from a self-proportioning twin pack cartridge type adhesive applicator.

17. A method according to any one of claims 13—16, characterised in that the adhesive is applied as a bead having a thickness of at least 3 mm.

18. A method according to any one of claims 13—17, characterised in that the monomeric component contains an elastomeric toughening agent.

19. A method according to claim 18, characterised in that the toughening agent is a chlorosulphonated polyethylene.

**Patentansprüche**

1. Initiatorzusammensetzung für Acrylkleber mit einem Amin-Aldehyd-Kondensat und einem Quell- oder Verdünnungsmittel dadurch gekennzeichnet, daß das Quell- oder Verdünnungsmittel ein Epoxyharz

umfaßt, das in einer Menge von 10 bis 90 Gew.-%, bezogen auf das Gesamtgewicht der Zusammensetzung, vorhanden ist.

2. Zusammensetzung nach Anspruch 1, dadurch gekennzeichnet, daß sie 5 bis 50 Gew.-% des Amin-Aldehyd-Kondensats enthält.

3. Zusammensetzung nach Anspruch 2, dadurch gekennzeichnet, daß der Amin-Aldehyd-Gehalt 15 bis 30 Gew.-% beträgt.

4. Zusammensetzung nach einem der vorausgehenden Ansprüche, dadurch gekennzeichnet, daß sie zusätzlich ein fein verteiltes, feinteiliges festes Material enthält.

5. Zusammensetzung nach Anspruch 4, dadurch gekennzeichnet, daß das fein verteilte feste Material Kieselsäure ist.

6. Zusammensetzung nach einem der Ansprüche 1 bis 5, dadurch gekennzeichnet, daß das Amin-Aldehyd-Kondensat ein Kondensat von Anilin und Butyraldehyd ist.

7. Zusammensetzung nach einem der Ansprüche 1 bis 6, dadurch gekennzeichnet, daß das Quellmittel ein flüssiges Epoxyharz mit einem Molekulargewicht unterhalb etwa 600 ist.

8. Zusammensetzung nach Anspruch 7, dadurch gekennzeichnet, daß das Quellmittel der Diglycidylether von Bisphenol A ist.

9. Zweikomponentenacrylkleberzusammensetzung mit einer Monomerkomponente, die einen oder mehrere Acrylatester im Gemisch mit einem freie Radikale ergebenden Katalysatorsystem umfaßt, und einer Initiatorkomponente, die ein Amin-Aldehyd-Kondensat enthält, das die freie Radikalpolymerisation der Monomerkomponente beim Vermischen mit derselben einleiten kann, dadurch gekennzeichnet, daß die Initiatorkomponente eine Zusammensetzung nach einem der Ansprüche 1 bis 8 ist.

10. Kleberzusammensetzung nach Anspruch 9, dadurch gekennzeichnet, daß die Monomerkomponente ein elastomeres Versteifungsmittel enthält.

11. Kleberzusammensetzung nach Anspruch 10, dadurch gekennzeichnet, daß das Versteifungsmittel ein chlorsulfoniertes Polyethylen ist.

12. Zusammensetzung nach Anspruch 9, 10 oder 11, dadurch gekennzeichnet, daß die Monomerkomponente und die Initiatorkomponente für die Verwendung in einem selbstproportionierenden Klebstoffapplikator vom Zwillingspackungspatronentyp getrennt verpackt sind.

13. Verfahren zur Aufbringung einer Zweikomponentenacrylkleberzusammensetzung auf einem Substrat, bei dem man eine Monomerkomponente, die einen polymerisierbaren Acrylatester im Gemisch mit einem Katalysatorsystem für freie Radikalpolymerisation enthält, mit einer Initiatorkomponente, die ein Amin-Aldehyd-Kondensat enthält, vormischt und den gemischten Kleber auf dem zu bindenden Substrat aufbringt, dadurch gekennzeichnet, daß die Initiatorkomponente eine Zusammensetzung nach einem der Ansprüche 1 bis 8 ist.

14. Verfahren nach Anspruch 13, dadurch gekennzeichnet, daß die Monomerkomponente und die Initiatorkomponente in einem Volumenverhältnis von 20:1 oder weniger vorgemischt werden.

15. Verfahren nach Anspruch 14, dadurch gekennzeichnet, daß das Verhältnis etwa 10:1 ist.

16. Verfahren nach Anspruch 13, 14 oder 15, dadurch gekennzeichnet, daß der Kleber aus einem selbstproportionierenden Klebstoffapplikator vom Zwillingspackungspatronentyp aufgebracht wird.

17. Verfahren nach einem der Ansprüche 13 bis 16, dadurch gekennzeichnet, daß der Kleber als eine Perle mit einer Dicke von wenigstens 3 mm aufgebracht wird.

18. Verfahren nach einem der Ansprüche 13 bis 17, dadurch gekennzeichnet, daß die Monomerkomponente ein elastomeres Versteifungsmittel enthält.

19. Verfahren nach Anspruch 18, dadurch gekennzeichnet, daß das Versteifungsmittel ein chlorsulfoniertes Polyethylen ist.

**Revendications**

1. Une composition d'initiateur pour colles acryliques comprenant un condensat amine-aldéhyde et une matière de charge ou diluant, caractérisé en ce que la matière de charge ou diluant comprend une résine époxy présente dans une quantité de 10% à 90% par poids basée sur le poids total de la composition.

2. Une composition selon la revendication 1, caractérisée en ce qu'elle contient de 5 à 50% par poids du condensat amine-aldéhyde.

3. Une composition selon la revendication 2, caractérisée en ce que le contenu en amine-aldéhyde est de 15 à 30% par poids.

4. Une composition selon l'une quelconque des revendications précédentes, caractérisée en ce qu'elle contient en plus une matière particulaire solide finement divisée.

5. Une composition selon la revendication 4, caractérisée en ce que la matière particulaire solide finement divisée est du silice.

6. Une composition selon l'une quelconque des revendications 1—5, caractérisée en ce que le condensat amine-aldéhyde est un condensat d'aniline et de butylaldéhyde.

7. Une composition selon l'une quelconque des revendications 1—6, caractérisée en ce que la matière de charge est une résine époxy liquide de poids moléculaire inférieur à environ 600.

8. Une composition selon la revendication 7, caractérisée en ce que l'agent de gonflement est de l'éther diglycidyl de bisphenol A.

9. Une composition de colle acrylique à deux composants contenant un composant monomère comprenant un ou plusieurs esters acryliques additionnés d'un système catalyseur à radical libre, et un composant initiateur contenant un condensat amine-aldéhyde capable d'initier la polymérisation à radical libre dudit composant monomère en cas de mélange avec celui-ci, caractérisée en ce que le composant initiateur est une composition selon l'une quelconque des revendications 1—8.

10. Une composition de colle selon la revendication 9, caractérisée en ce que le composant monomère contient un agent durcisseur élastomère.

11. Une composition de colle selon la revendication 10, caractérisée en ce que l'agent durcisseur est un polyéthylène chlorosulfoné.

12. Une composition selon les revendications 9, 10 ou 11, caractérisée en ce que le composant monomère et le composant initiateur sont emballés séparément en vue d'être utilisés dans un applicateur de colle à deux cartouches à dosage automatique.

13. Une méthode d'application d'une composition de colle acrylique à deux composants sur un substrat qui comprend le prémèlange d'un composant monomère contenant un ester acrylique polymérisable additionné d'un système catalyseur de polymérisation à radical libre, avec un composant initiateur contenant un condensat amine-aldéhyde, et d'application de la colle mélangée sur le substrat à souder, caractérisée en ce que le composant initiateur est une composition selon l'une quelconque des revendications 1—8.

14. Une méthode selon la revendication 13, caractérisée en ce que le composant monomère et le composant initiateur sont prémélangés à un rapport volumétrique de 20:1 ou moins.

15. Une méthode selon la revendication 14, caractérisée en ce que ledit rapport est d'environ 10:1.

16. Une méthode selon la revendication 13, 14 ou 15, caractérisée en ce que la colle est appliquée à l'aide d'un applicateur de colle à deux cartouches à dosage automatique.

17. Une méthode selon l'une quelconque des revendications 13—16, caractérisée en ce que la colle est appliquée en un cordon d'une épaisseur d'au moins 3 mm.

18. Une méthode selon l'une quelconque des revendications 13—16, caractérisée en ce que le composant monomère contient un agent durcisseur élastomère.

19. Une méthode selon la revendication 18, caractérisée en ce que l'agent durcisseur est un polyéthylène chlorosulfoné.